# EUROPEAN PATENT APPLICATION

(11) **EP 3 037 940 A1**
(43) Date of publication of application: **29.06.2016**
(21) Application number: 15194342.0
(22) Date of filing: 12.11.2015
(51) Int. Cl.: G06F 3/048, G06F 9/44, H04L 12/28

(54) **METHOD FOR IMPLEMENTING INSTALLATION OF SMART HARDWARE APPLIANCE AND DEVICE FOR THE SAME**

(30) Priority: 26.12.2014 CN 201410835745
(71) Applicant: Xiaomi Inc., Beijing 100085 (CN)
(72) Inventor: WANG, Yang, 100085 BEIJING (CN); FU, Qiang, 100085 BEIJING (CN); HOU, Enxing, 100085 BEIJING (CN)
(74) Representative: Delumeau, François Guy

(57) **Abstract**

The present disclosure relates to a method for implementing installation of a smart hardware appliance and a device for the same, which may simplify the operation of installation of the smart hardware appliance by the user. The method comprises: monitoring (S101, S203) whether a user clicks a first confirmation button on a user interface of a smart hardware application program of a terminal device; upon monitoring that the user has clicked the first confirmation button, determining (S102, S204) an installation guiding page for the smart hardware appliance associated with the first confirmation button; and sending (S103, S205) the installation guiding page to the smart hardware application program.

## Description

### TECHNICAL FIELD

The present disclosure generally relates to the field of electronic technology, and more particularly, to a method for implementing installation of a smart hardware appliance and a device for the same.

### BACKGROUND

For an excellent electronic product, exquisite appearance and reliable quality are essential. In addition to that, a concise specification may allow a user to learn to use the product without much learning effort. In the related art, an ordinary user needs to read a paper specification to learn how to install and use an electronic product after he purchases the new product. A dull and incomprehensible paper specification increases complexity of installation of the electronic product for the user, and damages user experience.

### SUMMARY

In order to overcome the problem in the related art, the present disclosure provides a method for implementing installation of a smart hardware appliance and a device for the same, to simplify operation of installation of a smart hardware appliance for a user.

According to a first aspect, the invention relates to a method for implementing installation of a smart hardware appliance, which is applied on a server, comprising:
monitoring whether a user clicks a first confirmation button on a user interface of a smart hardware application program of a terminal device;
upon monitoring that the user has clicked the first confirmation button, determining an installation guiding page for the smart hardware appliance associated with the first confirmation button; and
sending the installation guiding page to the smart hardware application program.

In one embodiment, the step of determining an installation guiding page for the smart hardware appliance associated with the first confirmation button, may comprise:
determining type information and model information of the smart hardware appliance associated with the first confirmation button; and
determining the installation guiding page for the smart hardware appliance according to the type information and the model information.

In one embodiment, the method may further comprise:
monitoring whether the user clicks a second confirmation button on the user interface; and
upon monitoring that the user has clicked the second confirmation button, sending to the smart hardware application program a prompting message for installing the smart hardware appliance associated with the second confirmation button, so as to prompt the user to click the first confirmation button according to the prompting message.

In one embodiment, the method may further comprise:
determining whether an update of type information and model information of the smart hardware appliance exists; and
if it is determined that an update of the type information and model information of the smart hardware appliance exists, updating the installation guiding page for the smart hardware appliance of which the update of the type information and model information exists.

According to a second aspect, the invention relates to a device for implementing installation of a smart hardware appliance, which is applied on a server, comprising:
a first monitoring module, configured to monitor whether a user clicks a first confirmation button on a user interface of a smart hardware application program of a terminal device;
a first determining module, configured to, upon the first monitoring module monitoring that the user has clicked the first confirmation button, determine an installation guiding page for the smart hardware appliance associated with the first confirmation button; and
a first sending module, configured to send the installation guiding page determined by the first determining module to the smart hardware application program.

In one embodiment, the first determining module may comprise:
a first determining sub-module, configured to determine type information and model information of the smart hardware appliance associated with the first confirmation button monitored by the first monitoring module; and
a second determining sub-module, configured to determine the installation guiding page for the smart hardware appliance according to the type information and the model information determined by the first determining sub-module.

In one embodiment, the device may further comprise:
a second monitoring module, configured to monitor whether the user clicks a second confirmation button on the user interface; and
a second sending module, configured to, upon the second monitoring module monitoring that the user has clicked the second confirmation button, send to the smart hardware application program a prompting message for installing the smart hardware appliance associated with the second confirmation button, so as to prompt the user to click the first confirmation button according to the prompting message.

In one embodiment, the device may further comprise:
a second determining module, configured to determine whether an update of type information and model information of the smart hardware appliance exists; and
an updating module, configured to, if the second determining module determines that an update of the type information and model information of the smart hardware appliance exists, update the installation guiding page for the smart hardware appliance of which the update of the type information and model information exists.

According to a third aspect, the invention relates to a device for implementing installation of a smart hardware appliance, comprising:
a processor; and
a memory for storing instructions executable by the processor;
wherein the processor is configured to perform:
   monitoring whether a user clicks a first confirmation button on a user interface of a smart hardware application program of a terminal device;
   upon monitoring that the user has clicked the first confirmation button, determining an installation guiding page for the smart hardware appliance associated with the first confirmation button; and
   sending the installation guiding page to the smart hardware application program.

In one particular embodiment, the steps for implementing installation of a smart hardware appliance are determined by computer program instructions.

Consequently, according to a fourth aspect, the invention is also directed to a computer program for executing the steps of a method for implementing installation of a smart hardware appliance as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

According to a fourth aspect of embodiments of the present disclosure, there is provided a computer program, which when being executed on a processor, performs the method according to the above first aspect.

According to a fifth aspect of embodiments of the present disclosure, there is provided a computer program product stored on a computer usable medium, comprising computer-readable program means for causing an electronic device to implement the method according to the above first aspect.

The advantageous effects brought by the technical solutions according to the embodiments of the present disclosure may comprise: it is determined an installation guiding page for the smart hardware appliance associated with the first confirmation button when it is monitored that the user has clicked the first confirmation button, thereby the user may install the smart hardware appliance according to the installation guiding page, eliminating the need of reading a paper specification of the product. Thus, the installation of the smart hardware appliance may be simplified, and the user experience in installing the smart hardware appliance may be improved.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig.1A is a flow chart of a method for implementing installation of a smart hardware appliance according to an exemplary embodiment;
Fig.1B is a schematic user interface of a smart hardware application program according to an exemplary embodiment;
Fig.2A is a flow chart of a method for implementing installation of a smart hardware appliance according to a first exemplary embodiment;
Fig.2B is a schematic user interface of a smart hardware application program according to the first exemplary embodiment;
Fig.2C is a flow chart of determining an installation guiding page according to the first exemplary embodiment;
Fig.3 is a flow chart of a method for implementing installation of a smart hardware appliance according to a second exemplary embodiment;
Fig.4 is a block diagram of a device for implementing installation of a smart hardware appliance according to an exemplary embodiment;
Fig.5 is a block diagram of another device for implementing installation of a smart hardware appliance according to an exemplary embodiment; and
Fig.6 is a block diagram of a device configured to implement installation of a smart hardware appliance according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

In embodiments of the present disclosure, the smart hardware appliance may communicate with a terminal device through a communication interface in a wired or wireless manner. The smart hardware appliance may be, for example, a smart socket, a smart camera, a smart lamp, a smart air purifier, a smart lighting, a smart coffee stove, a computer, a security system, a video and audio system, a smart water heater, a smart air conditioner, or the like.

The user may run a smart hardware application program on a terminal device, and the smart hardware application program comprises an user interface for the user to perform operations such as viewing, management, control of smart hardware appliances. Optionally, the smart hardware application program may also comprise a purchase interface for the user to browse, save or purchase smart hardware appliances. Optionally, the interface for the user to perform operations such as viewing, management, control of smart hardware appliances may comprise a list of smart hardware appliances for recording information on the smart hardware appliances operable by the user or possessed by the user. For example, if the user manages a smart air purifier or he possesses a smart air purifier, the smart air purifier may appear in the list of smart hardware appliances. In addition, the list of smart hardware appliances may also display current operation states of smart hardware appliances for the user.

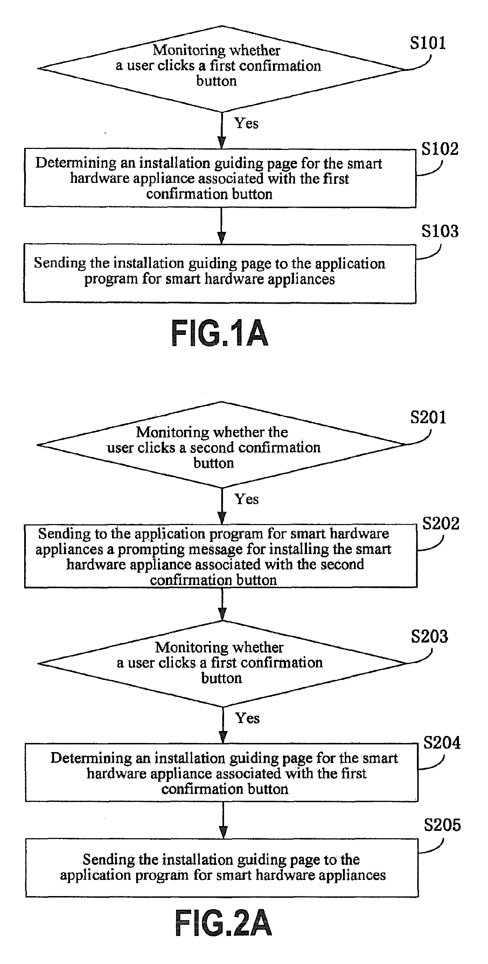

Fig.1A is a flow chart of a method for implementing installation of a smart hardware appliance according to an exemplary embodiment, which may be applied on a server. As shown in Fig.1A, the method for implementing installation of a smart hardware appliance comprises the following steps S101-S103.

In step S101, it is monitored whether a user clicks a first confirmation button on a user interface of a smart hardware application program of a terminal device.

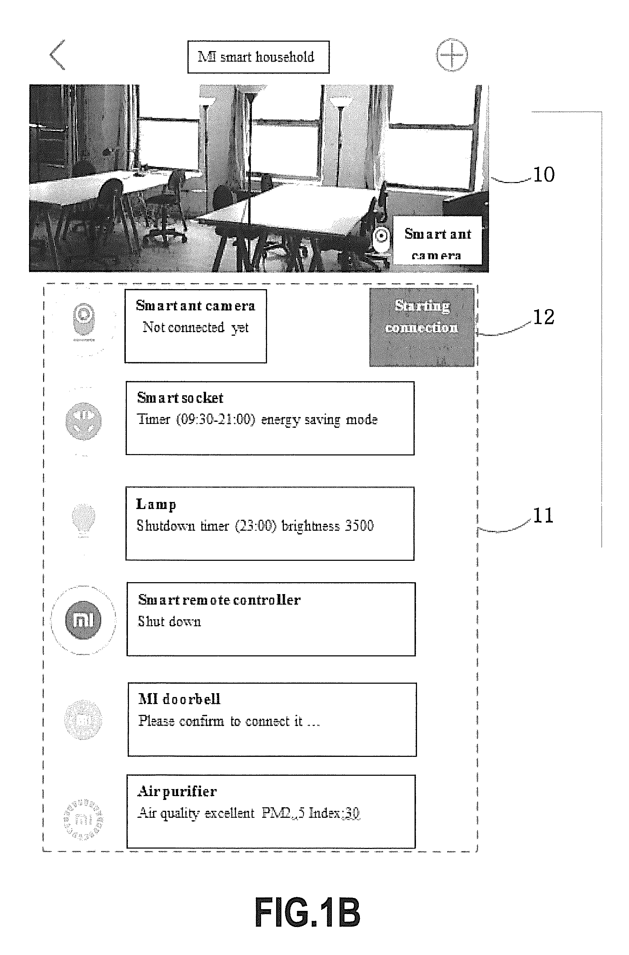

In an embodiment, referring to Fig.1B, after a user purchases a smart hardware appliance (for example, a smart ant camera) through the purchase interface of the application program 10 for smart hardware appliances, the user may click the first confirmation button 12 (i.e. "starting connection") on the list 11 of smart hardware appliances in the smart hardware application program.

In step S102, upon the user has clicked the first confirmation button is monitored, an installation guiding page for the smart hardware appliance associated with the first confirmation button is determined.

In an embodiment, since the user may purchase different types or different models of the same type of smart hardware appliances through the purchase interface of the application program 10 for smart hardware appliances, of which installation programs may be different, an installation guiding page associated with the smart hardware appliance confirmed through the first confirmation button 12 by the user should be determined, thereby the installation guiding page may match with the smart hardware appliance which the user wants to install. In an embodiment, the server may determine a smart hardware appliance displayed in the list 11 of smart hardware appliances of the application program 10 through a identification (ID) of the user, may monitor each smart hardware appliance in the list 11 of smart hardware appliances, and may determine type information and model information of the smart hardware appliance to be installed. In another embodiment, the server may also determine the type information and model information of the smart hardware appliance to be installed through information such as the type and the model of the smart hardware appliance carried by the first confirmation button 12.

In step S103, the installation guiding page is sent to the smart hardware application program.

In an embodiment, for example, when the user clicks the first confirmation button 12, since the first confirmation button 12 is associated with the "smart ant camera", when it monitors that the first confirmation button 12 has been clicked, the server may send the installation guiding page of the "smart ant camera" to the smart hardware application program, and the application program 10 for smart hardware appliances displays the installation guiding page. The server may also control a process displayed on the installation guiding page according to the process of installing the "smart ant camera" by the user.

In the present embodiment, it is determined an installation guiding page for the smart hardware appliance associated with the first confirmation button when it is monitored that the first confirmation button has been clicked, thereby the user may install the smart hardware appliance according to the installation guiding page, eliminating the need of reading a paper specification of the product. Thus, the installation process of the smart hardware appliance may be simplified, and the user experience in installing the smart hardware appliance may be improved.

In an embodiment, the step S102 may comprise:
determining type information and model information of the smart hardware appliance associated with the first confirmation button; and
determining the installation guiding page for the smart hardware appliance according to the type information and the model information.

In an embodiment, the method for implementing installation of a smart hardware appliance may further comprise:
monitoring whether the user clicks a second confirmation button on the user interface; and
upon monitoring that the user has clicked the second confirmation button, sending to the smart hardware application program a prompting message for installing the smart hardware appliance associated with the second confirmation button, so as to prompt the user to click the first confirmation button according to the prompting message.

In an embodiment, the method for implementing installation of a smart hardware appliance may further comprise:
determining whether an update of type information and model information of the smart hardware appliance exists; and
if it is determined that an update of the type information and model information of the smart hardware appliance exists, updating the installation guiding page for the smart hardware appliance of which the update of the type information and model information exists.

How to guide the installation of the smart hardware appliance will be described in detail in other embodiments later.

So far, through the above method provided by the embodiments of the present disclosure, the user may install the smart hardware appliance according to the installation guiding page, eliminating the need of reading a paper specification of the product. Thus, the installation of the smart hardware appliance may be simplified, and the user experience in installing the smart hardware appliance may be improved.

Hereinafter, the technical solution provided by the embodiments of the present disclosure will be described with reference to specific embodiments.

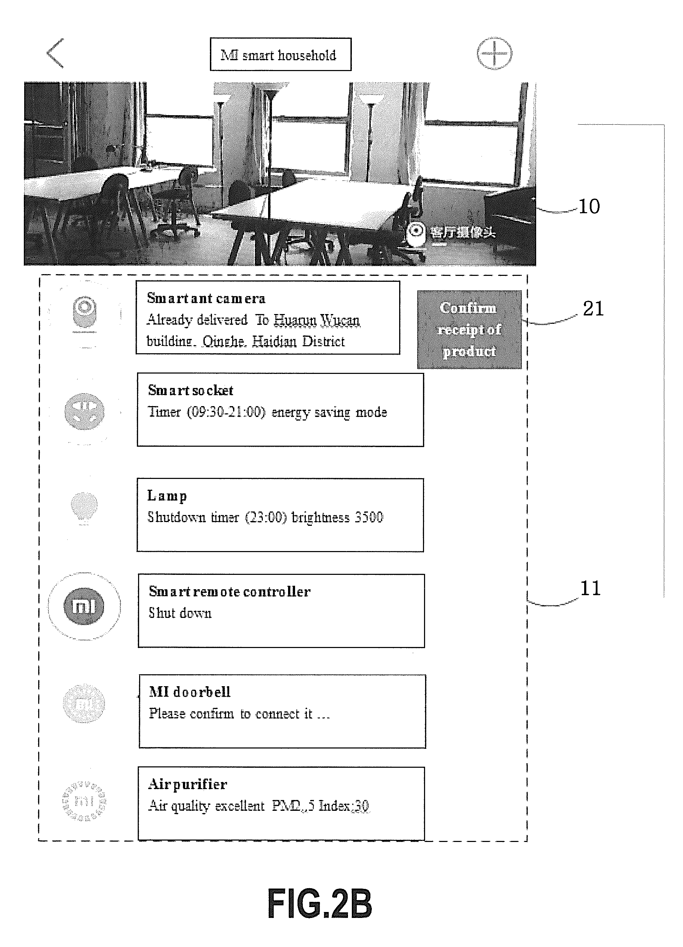

Fig.2A is a flow chart of a method for implementing installation of a smart hardware appliance according to an exemplary embodiment in which the above method provided by the embodiments of the present disclosure may be applied. Referring to Figs.1B and 2B, for example, the user wants to install a smart hardware appliance after he has purchased the smart hardware appliance through the purchase interface of the smart hardware application program. As shown in Fig.2A, the process comprises the following steps.

In step S201, it is monitored whether the user clicks a second confirmation button on the user interface of the smart hardware application program on the terminal device.

In an embodiment, referring to Fig.2B, after he purchases the "smart ant camera" through the purchase interface of the application program 10 for smart hardware appliances, the user may confirm he has received the product by clicking the second confirmation button 21.

In step S202, upon monitoring that the user has clicked the second confirmation button, it is sent to the smart hardware application program a prompting message for installing the smart hardware appliance associated with the second confirmation button.

In an embodiment, referring to Fig.1B, when the user clicks the second confirmation button 21, the prompting message sent by the server to the application program 10 for smart hardware appliances may be displayed on the first confirmation button 12. For example, "starting connection" may be displayed on the first confirmation button 12 to prompt the user that the smart hardware appliance may be installed.

In step S203, it is monitored whether the user clicks the first confirmation button on the user interface of the smart hardware application program on the terminal device according to the prompting message.

In step S204, upon the user has clicked the first confirmation button is monitored, an installation guiding page for the smart hardware appliance associated with the first confirmation button is determined.

In step S205, the installation guiding page is sent to the smart hardware application program.

Steps S203 to S205 may be referred to the above steps S101 to S103, which will not be repeated herein.

In the present embodiment, when it is monitored that the user has clicked the second confirmation button, a prompting message is sent to the smart hardware application program, the user may be informed that the smart hardware appliance may be installed. When it is monitored that the user has clicked the first confirmation button, the installation guiding page for the smart hardware appliance associated with the first confirmation button is determined, thereby the user may install the smart hardware appliance according to the installation guiding page, eliminating the need of reading a paper specification of the product. Thus, the installation of the smart hardware appliance may be simplified, and the user experience in installing the smart hardware appliance may be improved.

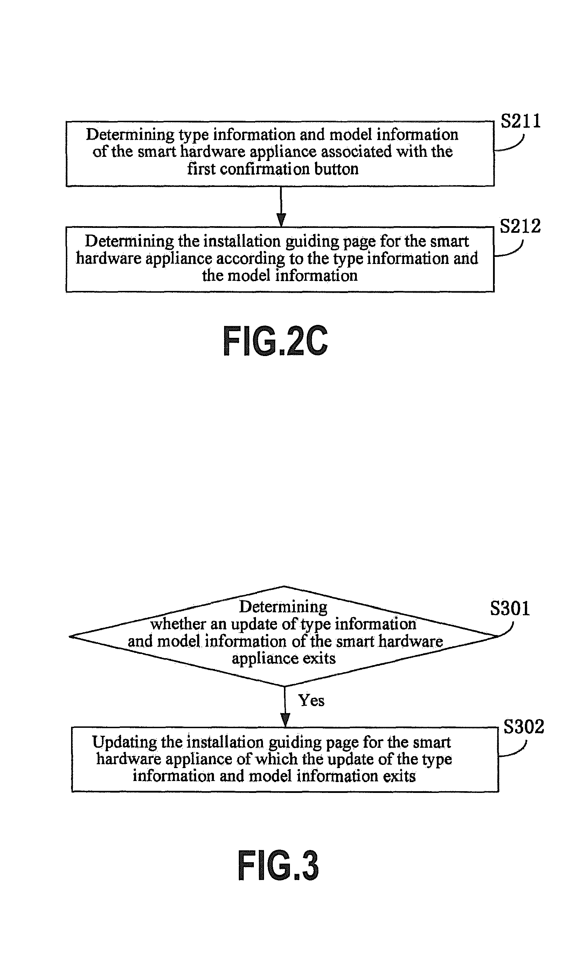

Fig.2C is a flow chart of determining an installation guiding page according to an exemplary embodiment. As shown in Fig.2C, in the above step S204, the installation guiding page may be determined through the following steps.

In step S211, type information and model information of the smart hardware appliance associated with the first confirmation button are determined.

In step S212, the installation guiding page for the smart hardware appliance is determined according to the type information and the model information.

Since the purchase interface of the smart hardware application program may provide different types or different models of the same type of smart hardware appliances for users, after a user purchases one of the smart hardware appliance, and wants to install it, he needs to acquire the type information and model information of the smart hardware appliance associated with the first confirmation button. For example, the user purchases a "smart ant camera", when the user clicks the first confirmation button, the server may determine an installation guiding page matched with the "smart ant camera", that is, the server may determine that the smart hardware appliance to be installed is a smart camera, and determine which type of smart camera it is, so as to allow the user to complete the installation of the smart camera according to the installation guiding page for the smart camera.

In the present embodiment, through the installation guiding page matched with the smart hardware appliance, the user may install the smart hardware appliance smoothly. Thereby, the need of reading a dull paper specification of the product may be eliminated, the installation of the smart hardware appliance may be simplified, and the user experience in installing the smart hardware appliance may be improved.

Fig.3 is a flow chart of a method for implementing installation of a smart hardware appliance according to an exemplary embodiment in which the above method provided by the embodiments of the present disclosure may be applied. Updating of the installation guiding page is described with reference to an embodiment, as shown in Fig.3, comprising the following steps.

In step S301, it is determined whether an update of type information and model information of the smart hardware appliance exists.

In step S302, if it is determined that an update of the type information and model information of the smart hardware appliance exists, it is updated the installation guiding page for the smart hardware appliance of which the update of the type information and model information exists.

In an embodiment, with the increase of the types and updating of the models of the smart hardware appliances provided for users by the purchase interface of the smart hardware application program, when there is a new model of smart hardware appliances, the installation guiding page may be updated according to the type and the model. Thereby, when a user purchases a newest smart hardware appliance, he may nevertheless complete the installation of the smart hardware appliance through the installation guiding page. Thus, the need of reading a paper specification of the product may be eliminated, and the user experience in installing the smart hardware appliance may be significantly improved.

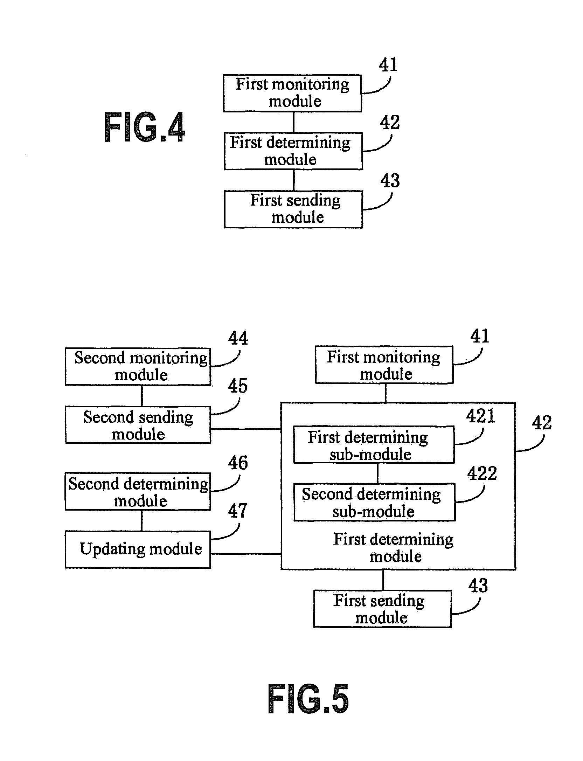

Fig.4 is a block diagram of a device for implementing installation of a smart hardware appliance according to an exemplary embodiment, which may be applied on a server. As shown in Fig.4, the device for implementing installation of a smart hardware appliance comprises:
a first monitoring module 41, configured to monitor whether a user clicks a first confirmation button on a user interface of a smart hardware application program of a terminal device;
a first determining module 42, configured to, upon the first monitoring module 41 monitoring that the user has clicked the first confirmation button, determine an installation guiding page for the smart hardware appliance associated with the first confirmation button; and
a first sending module 43, configured to send the installation guiding page determined by the first determining module 42 to the smart hardware application program.

Referring to Fig.5, the first determining module 42 may comprise:
a first determining sub-module 421, configured to determine type information and model information of the smart hardware appliance associated with the first confirmation button monitored by the first monitoring module 41; and
a second determining sub-module 422, configured to determine the installation guiding page for the smart hardware appliance according to the type information and the model information determined by the first determining sub-module 411.

In an embodiment, the device may further comprise:
a second monitoring module 44, configured to monitor whether the user clicks a second confirmation button on the user interface; and
a second sending module 45, configured to, upon the second monitoring module 45 monitoring that the user has clicked the second confirmation button, send to the smart hardware application program a prompting message for installing the smart hardware appliance associated with the second confirmation button, so as to prompt the user to click the first confirmation button according to the prompting message, which may be monitored by the first monitoring module 41.

In an embodiment, the device may further comprise
a second determining module 46, configured to determine whether an update of type information and model information of the smart hardware appliance exists; and
an updating module 47, configured to, if the second determining module 46 determines that an update of the type information and model information of the smart hardware appliance exists, update the installation guiding page for the smart hardware appliance of which the update of the type information and model information exists, then the first determining module 42 may determine the installation guiding page for the smart hardware appliance associated with the first confirmation button monitored by the first monitoring module 41.

With respect to the devices in the above embodiments, the specific manners for performing operations for individual modules therein have been described in detail in the embodiments regarding the related methods, which will not be elaborated herein.

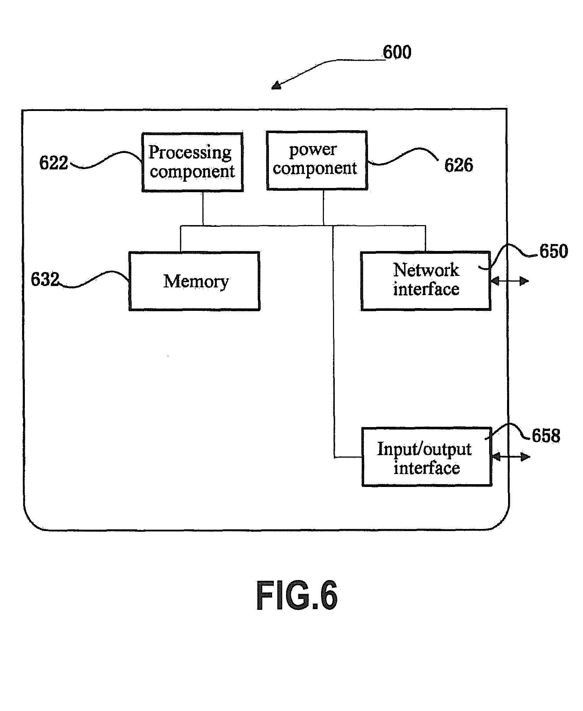

Fig.6 is a block diagram of a device configured to implement installation of a smart hardware appliance according to an exemplary embodiment. For example, the device 600 may be a server. Referring to Fig. 6, the device 600 may comprise a processing component 622, which further comprises one or more processors and a storage resource represented by a memory 632 for storing instructions such as an application program executable by the processing component 622. The an application program stored in the memory 632 may comprise one or more modules each corresponding to a set of instructions. In addition, the processing component 622 is configured to execute instructions to perform the above method for implementing installation of a smart hardware appliance.

The device 600 further comprises a power component 626 configured to perform power management for the device 600, a wired or wireless network interface 650 configured to connect the device 600 to network, and an input/output (I/O) interface 658. The device 600 may be operated based on an operating system such as Windows ServerTM, Mac OS XTM, UnixTM, LinuxTM, FreeBSDTM or the like stored in the memory 632.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for implementing installation of a smart hardware appliance, which is applied on a server, **characterized in that**, the method comprises:
monitoring (S101, S203) whether a user clicks a first confirmation button on a user interface of a smart hardware application program of a terminal device;
upon monitoring that the user has clicked the first confirmation button, determining (S102, S204) an installation guiding page for the smart hardware appliance associated with the first confirmation button; and
sending (S103, S205) the installation guiding page to the smart hardware application program.

2. The method according to claim 1, wherein the step of determining an installation guiding page for the smart hardware appliance associated with the first confirmation button, comprises:
determining (S211) type information and model information of the smart hardware appliance associated with the first confirmation button; and
determining (S212), according to the type information and the model information, the installation guiding page for the smart hardware appliance.

3. The method according to claim 1 or 2, wherein, the method further comprises:
monitoring (S201) whether the user clicks a second confirmation button on the user interface; and
upon monitoring that the user has clicked the second confirmation button, sending (S202) to the smart hardware application program a prompting message for installing the smart hardware appliance associated with the second confirmation button, so as to prompt the user to click the first confirmation button according to the prompting message.

4. The method according to anyone of claims 1 to 3, wherein, the method further comprises:
determining (S301) whether an update of type information and model information of the smart hardware appliance exists; and
if it is determined that an update of the type information and model information of the smart hardware appliance exists, updating (S302) the installation guiding page for the smart hardware appliance of which the update of the type information and model information exists.

5. A device for implementing installation of a smart hardware appliance, which is applied on a server, **characterized in that**, the device comprises:
a first monitoring module (41), configured to monitor whether a user clicks a first confirmation button on a user interface of a smart hardware application program of a terminal device;
a first determining module (42), configured to, upon the first monitoring module monitoring that the user has clicked the first confirmation button, determine an installation guiding page for the smart hardware appliance associated with the first confirmation button; and
a first sending module (43), configured to send the installation guiding page determined by the first determining module to the smart hardware application program.

6. The device according to claim 5, wherein, the first determining module comprises:
a first determining sub-module (421), configured to determine type information and model information of the smart hardware appliance associated with the first confirmation button monitored by the first monitoring module; and
a second determining sub-module (422), configured to determine the installation guiding page for the smart hardware appliance according to the type information and the model information determined by the first determining sub-module.

7. The device according to claim 5 or 6, wherein, the device further comprises:
a second monitoring module (44), configured to monitor whether the user clicks a second confirmation button on the user interface; and
a second sending module (45), configured to, upon the second monitoring module monitoring that the user has clicked the second confirmation button, send to the smart hardware application program a prompting message for installing the smart hardware appliance associated with the second confirmation button, so as to prompt the user to click the first confirmation button according to the prompting message.

8. The device according to any one of claims 5 to 7, wherein, the device further comprises:
a second determining module (46), configured to determine whether an update of type information and model information of the smart hardware appliance exists; and
an updating module (47), configured to, if the second determining module determines that an update of the type information and model information of the smart hardware appliance exists, update the installation guiding page for the smart hardware appliance of which the update of the type information and model information exists.

9. A device for implementing installation of a smart hardware appliance, **characterized in that**, the device comprises:
a processor (622); and
a memory (632) for storing instructions executable by the processor;
wherein the processor is configured to perform:
monitoring whether a user clicks a first confirmation button on a user interface of a smart hardware application program of a terminal device;
upon monitoring that the user has clicked the first confirmation button, determining an installation guiding page for the smart hardware appliance associated with the first confirmation button; and
sending the installation guiding page to the smart hardware application program.

10. A computer program including instructions for executing the steps of a method for implementing installation of a smart hardware appliance according to any one of claims 1 to 4 when said program is executed by a computer.

11. A recording medium readable by a computer and having recorded thereon a computer program including instructions for executing the steps of a method for implementing installation of a smart hardware appliance according to any one of claims 1 to 4.
